# EUROPÄISCHE PATENTSCHRIFT

(11) **EP 3 684 641 B1**
(45) Veröffentlichungstag und Bekanntmachung des Hinweises auf die Patenterteilung: **13.03.2024**
(21) Anmeldenummer: 18793586.1
(22) Anmeldetag: 12.10.2018
(51) Int. Cl.: B60L 53/10, B60L 53/14, B60L 53/18, G07F 15/00, B60L 53/66, G01R 19/165, G06Q 20/18, G06Q 20/12

(54) **MESSVORRICHTUNG UND VERFAHREN ZUR ERFASSUNG EINER VON EINER LADESTATION ÜBERGEBENEN ELEKTRISCHEN ENERGIE**
MEASURING DEVICE AND METHOD FOR MEASURING ELECTRICAL ENERGY TRANSFERRED FROM A CHARGING STATION
DISPOSITIF DE MESURE ET PROCÉDÉ DE DÉTECTION D'UNE ÉNERGIE ÉLECTRIQUE TRANSFÉRÉE PAR UNE STATION DE CHARGE

(30) Priorität: 28.11.2017 DE 102017221298
(43) Veröffentlichungstag der Anmeldung: 29.07.2020
(73) Patentinhaber: Siemens Aktiengesellschaft, 80333 München (DE)
(72) Erfinder: BODE, Sebastian, 59229 Ahlen (DE)
(74) Vertreter: Siemens Patent Attorneys
(86) Internationale Anmeldenummer: PCT/EP2018/077858
(87) Internationale Veröffentlichungsnummer: WO 2019/105641

(56) Entgegenhaltungen:
- EP-A1- 2 865 558
- DE-A1-102011 013 450
- DE-A1-102011 089 567
- US-A1- 2012 253 715
- US-A1- 2015 346 288
- US-A1- 2020 294 401

## Beschreibung

Die Erfindung betrifft eine Messvorrichtung und ein Verfahren zur Erfassung einer von einer Ladestation übergebenen elektrischen Energie.

Elektrofahrzeuge bzw. zumindest teilweise mit elektrischer Energie angetriebene Fahrzeuge weisen mindestens einen Akkumulator auf, welcher in einem laufenden Betrieb des Elektro-fahrzeugs regelmäßig zu laden ist. Ein Laden des Elektrofahr-zeugs erfolgt an einer Ladestation - in der Fachwelt auch als Electric Vehicle Supply Equipment oder abkürzend EVSE bekannt - welche über ein Ladekabel mit dem Elektrofahrzeug verbunden wird.

Eine in der Ladestation vorgesehene oder dieser zugeordnete Messvorrichtung dient einer Erfassung der von der Ladestation an das Elektrofahrzeug übergebenen elektrischen Energie. Diese übergebene elektrische Energie wird dem Fahrzeughalter üblicherweise in Rechnung gestellt. Im Stand der Technik sind verschiedene Maßnahmen zur Bestimmung der übergebenen elektrischen Energie bekannt.

Die DE102011089567A1 offenbart ein Verfahren zur Performanzbewertung eines Speisestromkreises in einer Ladestation. Hierbei wird eine elektrische Verbindung zwischen einem Fahrzeugstromkreis und dem Speisestromkreis mit einer Wechselstromenergiequelle hergestellt. Ein oder mehrere Spannungsmesseinheiten sowie ein oder mehrere Strommesseinheiten werden von einer Steuereinheit so angesteuert, dass Spannungs- und Strommessungen zur Berechnung von Widerstandswerten durchgeführt werden können. Die Steuereinheit vergleicht die berechneten Widerstandswerte mit vorgegebenen Widerstandsdaten, um die Leistung der Versorgungsschaltung zu bewerten.

Eichrechtlichen Vorgaben gemäß ist die übergebene elektrische Energie am Übergabepunkt zu messen, d.h. an dem Ort, an dem die elektrische Energie in das Elektrofahrzeug eingespeist wird. Derzeit erfolgt eine Energiemessung allerdings überwiegend in einer Messvorrichtung der Ladestation. Die dort gemessene Energie beinhaltet jedoch auch einen Energieanteil, welche in einem ohmschen Widerstand des Ladekabels in thermische Energie umgesetzt wird und somit am Übergabepunkt nicht als elektrische Energie übergeben wird. Bei heute angestrebten Schnellladevorgängen mit hohen Ladeleistungen - in der Fachwelt auch als High Power Charging bekannt - kann der in thermische Energie umgesetzte Energieanteil - im Folgenden thermischen Blindenergie - durchaus zwei Prozent der von der Ladestation gelieferten Energie überschreiten.

Aufgrund der Gegebenheiten im Umfeld einer Ladestation wäre der Übergabepunkt am fahrzeugseitigen Ende des Ladekabels, also am Stecker zu messen, welcher in eine entsprechende Buchse am Fahrzeug eingesteckt wird. An dieser Stelle eine Messeinrichtung vorzusehen ist - unter anderem aufgrund von Größen- und Gewichtseinschränkungen des Steckers - allerdings nicht praktikabel.

Eine pauschale Berücksichtigung der thermischen Blindenergie bei der Verrechnung der elektrischen Energie, etwa durch Abzug eines prozentualen Anteils, ist eichrechtlich nicht zulässig, da dieser Abzug auf einem bloßen Schätzwert beruhen würde, welche aufgrund von technischen Gegebenheiten Schwankungen unterliegt. Eine eichrechtskonforme Verrechnung erfordert insbesondere einen nachweisbaren und nicht bestreitbaren Beleg der an einem Übergabepunkt übergebenen elektrischen Energie.

Aufgabe der Erfindung ist es, Mittel für eine eichrechtskonforme Bestimmung der von einer Ladestation übergebenen elektrischen Energie anzugeben, welche eine Messung am Übergabepunkt, also am fahrzeugseitigen Ende des Ladekabels, unnötig machen.

Die Aufgabe wird durch eine Messvorrichtung mit den Merkmalen des Patentanspruchs 1 gelöst.

Der erfindungsgemäße Messvorrichtung zur Erfassung einer von einer Ladestation übergebenen elektrischen Energie basiert auf einer bekannten Konstellation, bei der zumindest zeitweise ein Ladekabel zur Ausbildung einer elektrischen Verbindung zwischen einem Anschlusspunkt des Ladekabels an der Ladestation und einen Übergabepunkt des Ladekabels an einer Energiesenke - beispielsweise ein Elektrofahrzeug - zuordenbar ist. Dieses Ladekabel umfasst eine Leitergarnitur mit einer Mehrzahl von Leitern. Die vorbeschriebene aus dem Stand der Technik bekannte Konstellation umfasst zwei Messeinheiten . Eine erste Messeinheit ist zur Messung einer ersten elektrischen Leistung an mindestens zwei Leitern im Anschlusspunkt des Ladekabels eingerichtet. Im Fall eines alternierenden einphasigen Ladestroms oder im Fall eines Gleichstroms erfolgt die Messung der ersten elektrischen Leitung an zwei Leitern, im Fall eines mehrphasigen Ladestroms an mindestens drei Leitern des Ladekabels. Eine zweite Messeinheit ist zur Messung zumindest einer zweiten elektrischen Größe am Anschlusspunkt vorgesehen.

Die erfindungsgemäße Messvorrichtung zur Erfassung einer von einer Ladestation übergebenen elektrischen Energie umfasst die vorbeschriebene Konstelation in Zusammenwirkung mit einer erfindungsgemäßen Bestimmungseinheit, welche aus der mindestens einen zweiten elektrischen Größe einen Blindleistungsanteil bestimmt, aus der eine am Übergabepunkt übergebene elektrische Energie anhand der um den Blindleistungsanteil kompensierten ersten elektrischen Leistung bestimmt wird, wobei die zweite elektrische Größe zu einer für die übergebene elektrische Energie relevanten analogen elektrischen Größe in einem festen Verhältnis steht. Die erste und die zweite Messeinheit sowie die Bestimmungseinheit sind optional auch in einer oder mehreren Einheiten zusammengefasst und können jeweils oder insgesamt als analoge, digitale oder hybride Einheiten ausgeführt sein.

Die Begriffe »Blindleistungsanteil« oder »Blindleistung« sind in diesem Zusammenhang als elektrische Energie zu erstehen, welche entlang des Ladekabels in Wärmenergie umgesetzt wird (»ohmscher Übertragungsverlust«) und daher am Übergabepunkt nicht als elektrische Energie zur Verfügung steht. Eine Blindleistung im Sinne dieser Beschreibung ist nicht mit dem aus der Wechselstromtechnik bekannten Begriff zu verwechseln, welcher eine zum Auf- und Abbau elektromagnetischer Felder über das Wechselstromnetz als Blindleistung in Abgrenzung zu einer Wirkleistung versteht.

Die erfindungsgemäße Messvorrichtung löst die gestellte Aufgabe einer eichrechtskonformen Bestimmung der von einer Ladestation übergebenen elektrischen Energie durch eine Messung der Energie vor dem Übergabepunkt, wobei der Blindleistungsanteil vom Abschlusspunkt bis zum Übergabepunkt durch die Messvorrichtung kompensiert werden.

Hierzu wird der Blindleistungsanteil aus mindestens einer zweiten elektrischen Größe - beispielsweise ein ohmscher Widerstand eines Leiters oder einer Leiterschirmung - bestimmt, welche zu einer für die übergebene elektrische Energie relevanten analogen elektrischen Größe - beispielsweise ein ohmscher Gesamtwiderstand mindestens zweier an einem Ladestromkreis beteiligten Leiter - in einem festen Verhältnis steht.

Zur Bestimmung der zweiten elektrischen Größe, welche zu einer für die übergebene elektrische Energie relevanten analogen elektrischen Größe in einem festen Verhältnis steht könnte gemäß einer Ausgestaltung der Erfindung beispielsweise vorgesehen sein, den Widerstand einer Leiterschirmung zu erfassen, welche bei gegebener Ladekabellänge in einem festen Verhältnis zum ohmschen Widerstand des am Ladestromkreis beteiligten Leiters steht. Der Vorteil der erfindungsgemäßen Lösung besteht darin, dass eine Widerstandsänderung aufgrund einer Temperaturerhöhung sowohl die erfindungsgemäß bestimmte zweiten elektrischen Größe - den ohmschen Widerstand der Leiterschirmung - als auch die relevante analogen elektrischen Größe - den ohmsche Gesamtwiderstand der am Ladestromkreis beteiligten Leiter - in gleicher Weise verändert, so dass in eichrechtlich nicht zu beanstandender Weise aus der zweiten elektrischen Größe nachweisbar und nicht bestreitbar eine Bestimmung des Blindleistungsanteils und schließlich eine Bestimmung der übergebenen elektrischen Energie erfolgen kann.

Ein weiterer Vorteil der erfindungsgemäßen Lösung besteht darin, dass Austausch des Ladekabels sowohl die erfindungsgemäß bestimmte zweiten elektrischen Größe - beispielsweise den ohmschen Widerstand der Leiterschirmung oder eines anderen Leiters - als auch die relevante analogen elektrischen Größe - den ohmsche Gesamtwiderstand der am Ladestromkreis beteiligten Leiter - in gleicher Weise verändert, so dass auch in diesem Fall in eichrechtlich nicht zu beanstandender Weise aus der zweiten elektrischen Größe nachweisbar und nicht bestreitbar eine Bestimmung des Blindleistungsanteils und schließlich eine Bestimmung der übergebenen elektrischen Energie erfolgen kann.

Durch eine derartige mechanische Kopplung der erfindungsgemäß bestimmten zweiten elektrischen Größe mit der analogen für eine Kompensation der Blindleistung verwendeten elektrischen Größe wäre eine Manipulation in vorteilhafter Weise erschwert und zudem leicht erkennbar.

Außerdem ist es in vorteilhafter Weise zulässig, ein Kabel bei der Montage zu kürzen, durch weitere Kabel mit möglicherweise andersgearteten Leitermaterialen zu verlängern oder bei einer Reparatur zu ersetzen.

Die erfindungsgemäße Messvorrichtung gestattet es ferner, den Abstand zwischen dem Anschlusspunkt - dem Ort der Messung - und dem Übergabepunkt - dem Ort der Einspeisung an die Energiesenke - deutlich größer zu wählen und damit die Messvorrichtung in vorteilhafter Weise auch in einer vom eigentlichen Ladeort abgesetzten Einheit - z.B. in einer mehrere Ladesäulen versorgenden Zentraleinheit - vorzusehen. Eine derartige Zentraleinheit beherbergt die Einrichtungen einer Ladestation und wird über Verbindungskabel mit mehreren abgesetzten Ladesäulen versehen. Eine von der Zentraleinheit abgesetzte Ladesäule beinhaltet im Vergleich zu einer Ladestation dann lediglich die Mechanik zur Handhabung des Ladekabels.

Die Vorsehung einer abgesetzten Zentraleinheit mit daran angeschlossenen Ladesäulen erleichtert wiederum einen Betrieb der Messvorrichtung innerhalb vorgeschriebener Temperaturgrenzen, da eine Mehrzahl von Messvorrichtungen in einer klimatisierten Behausung der Zentraleinheit verbaut werden kann.

Außerdem wird durch die Vorsehung einer abgesetzten Zentraleinheit ein jeweiliger Bauraumbedarf von damit verbundenen Ladesäulen deutlich reduziert. Zudem entfällt ein Bedarf für eine Hilfsstromversorgung derartiger Ladesäulen in der Nähe des Übergabepunktes zumindest für einen Betrieb einer jeweiligen Messvorrichtung, welche in vorteilhafter Weise in der abgesetzten Zentraleinheit betrieben werden kann.

Aufgrund der verschiedenen Vorteile der Erfindung kann beispielsweise eine Zentraleinheit für eine Mehrzahl von Schnellladevorgänge mit hoher Ladeleistung ermöglichende Ladesäulen deutlich einfacher und kostengünstiger aufgebaut und gewartet werden.

Weitere Ausgestaltungen der Erfindung sind Gegenstand der abhängigen Patentansprüche.

Gemäß einer Ausgestaltung der Erfindung erfolgt die Messung der zumindest einen zweiten elektrischen Größe an mindestens einem Leiter, welcher mit keinem der zur Messung der ersten elektrischen Leistung vorgesehenen Leiter übereinstimmt, also nicht an den mindestens zwei Leiter, an der die Messung der ersten elektrischen Leitung erfolgt. Wenngleich im Rahmen der Erfindung eine Messung der zweiten elektrischen Größe auch auf denselben Leitern erfolgen kann, an denen auch die Messung der ersten elektrischen Leistung erfolgt, bietet die Messung der zweiten elektrischen Größe an anderen Leitern des Ladekabels gemäß dieser Ausgestaltung in vielen Fällen Vorteilen. Während eine Messung der zweiten elektrischen Größe auf denselben Leitern zu berücksichtigen ist, dass Messungen einer bestimmten zweiten elektrischen Größe - z.B. eine Messung des elektrischen Widerstands - nicht während des Ladevorgangs - und daher nur vor, nach oder umschaltend während eines Ladevorgangs - erfolgen können, ist eine kontinuierliche Messung auf anderen Leitern durchaus möglich. Diese vorteilhafte Ausgestaltung bietet sich also beispielsweise an, wenn die zweite elektrische Größe laufend, also während des Ladevorgangs bestimmt werden soll.

Gemäß einer alternativen Ausgestaltung der Erfindung erfolgt die Messung der zweiten elektrischen Größe zumindest teilweise an mindestens einer Leiterschirmung oder an einer Ladekabelschirmung, also beispielsweise einem Schirmgeflecht, welches einen Leiter die vollständige Leitergarnitur innerhalb des Ladekabels umgibt. Eine Zweipol-Messung, beispielsweise des Widerstands, erfolgt entweder vollständig über zwei Leiterschirmungen, also auf einem Stromkreis hin zur Energiesenke und zurück auf einer Leiterschirmung eines anderen Leiters, oder teilweise, also auf einem Stromkreis hin zur Energiesenke und zurück auf einem anderen Leiter. Im Fall einer Messung des ohmschen Widerstands als zweite elektrische Größe steht auch unter Beteiligung einer Leiterschirmung der gemessene ohmsche Widerstand in einem bestimmten vorbekannten Verhältnis zu dem des Leiters, was sich bei Verwendung des gleichen leitenden Materials in einem bestimmten Verhältnis der Querschnitte niederschlägt. Das Verhältnis kann für gefertigte Leitungen in vorteilhafter Weise leicht überprüft aber - ebenso vorteilhaft - nur schwer verändert werden. Darüber hinaus erfolgt eine Änderung des elektrischen Widerstands - insbesondere aufgrund einer ansteigenden Temperatur des Ladekabels beim Ladevorgang - sowohl auf die ladestromführenden Leitungen als auch auf die Leiterschirmung ein, sodass der mit Hilfe des gemessenen ohmschen Widerstands ermittelte Blindleistungsanteil exakt bestimmbar ist.

Eine Energiemessung umfasst beispielsweise eine Messung des elektrischen Widerstands eines Leiterschirms, multipliziert mit dem proportionalen Verhältnis zum elektrischen Widerstand der Ladestromleitungen und multipliziert mit dem Quadrat eines anderweitig gemessenen Integrals eines Ladestroms. Alternativ wird gegenüber einem Massepotential eine äquivalente Spannung an eine Leiterschirmung angelegt und die Spannung am zweiten Ende der Leiterschirmung so eingestellt, dass der Strom durch den Schirm wiederum in einem festen Verhältnis zum gemessenen Strom steht, wobei dieses Verhältnis wiederum durch das Querschnittsverhältnis von Leiter und Schirm bestimmt wird wodurch die zweite Spannung die Spannung am Übergabepunkt repräsentiert. Auf diese Weise ist eine Bestimmung des Blindleistungsanteils aus der Spannung, der zweiten elektrischen Größe, möglich, ohne dass diese gemessen wird.

Im Weiteren werden Ausführungsformen des erfindungsgemäßen Verfahrens und der erfindungsgemäßen Steuerungsvorrichtung unter Bezug auf die beigefügten Figuren beschrieben.

Es zeigen:
- Fig. 1: ein Blockschaltbild zur Darstellung einer Ladeinfrastruktur in Zusammenwirkung mit erfindungsgemäßen Funktionseinheiten; und;
- Fig. 2: ein Blockschaltbild zur Darstellung einer Messvorrichtung gemäß einem Ausführungsbeispiel der Erfindung.

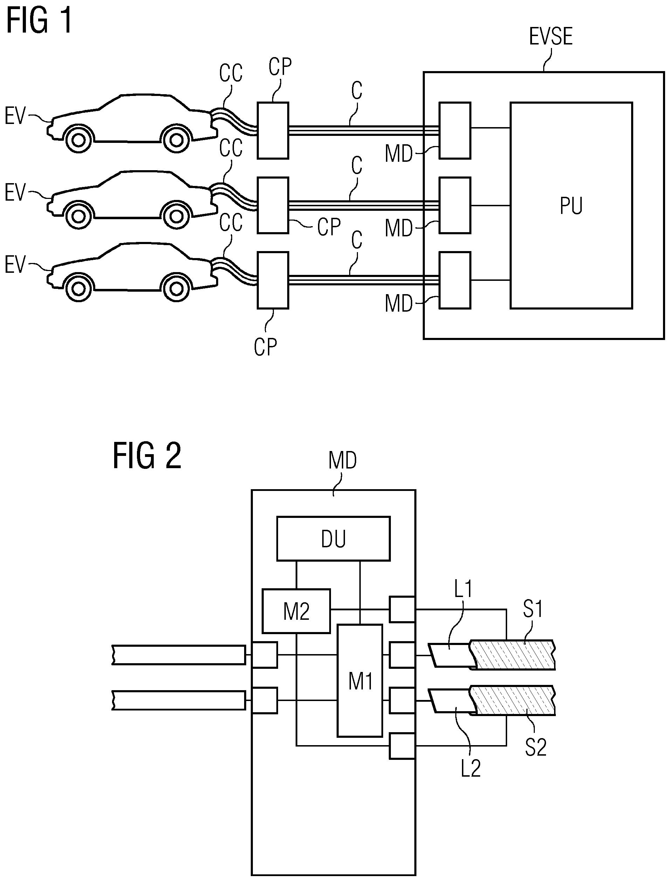

FIG.1 zeigt eine Ladeinfrastruktur mit drei Elektrofahrzeugen EC, welche über ein jeweiliges Ladekabel CC mit einer Ladesäule CP verbunden sind. Die Ladesäulen CP sind jeweils mit einem Verbindungskabel C mit einer Ladestation EVSE verbunden. Die Ladestation EVSE enthält eine Vorrichtung PU zur fachüblichen Bereitstellung, Aufbereitung und Steuerung eines elektrischen Ladestromstroms, auf die hier nicht näher eingegangen wird. An jeweiligen drei Ausgangsleitungen dieser Vorrichtung PU ist eine jeweilige Messvorrichtung MD installiert, an welche das Verbindungskabel C angeschlossen ist.

Diese Ausgestaltung der Erfindung betrifft also eine eingangs angesprochene Konstellation, bei der die als Zentraleinheit ausgestaltete Ladestation EVSE mehrere Ladesäulen CP versorgt. Die von der Ladestation EVSE abgesetzten Ladesäulen CP beinhalten dann - von einigen Anzeigen- und Steuerelementen abgesehen - im Wesentlichen lediglich die Mechanik zur Handhabung des Ladekabels CC, nicht aber Vorrichtungen zur Bereitstellung, Aufbereitung und Steuerung des elektrischen Ladestromstroms, welche in der Vorrichtung PU der zentralen Ladestation EVSE vorgesehen sind.

Diese Konstellation ermöglicht es, den Abstand zwischen dem Anschlusspunkt - dem Ort der Messung - und dem Übergabepunkt - dem Ort der Einspeisung am Elektrofahrzeug EV - deutlich größer zu wählen und damit die Messvorrichtung MD in vorteilhafter Weise auch in der vom eigentlichen Ladeort abgesetzten Ladestation EVSE vorzusehen.

Ein übliches Ladekabel CC umfasst eine Kabelgarnitur bestehend aus mehreren Leitungen zur jeweiligen Ladestromführung - beispielsweise Außenleiter bzw.

Phasenleiter, Neutralleiter, Schutzleiter etc. - sowie mindestens eine Signalleitung. Ein Schutzleiter in der Kabelgarnitur bildet dabei aus Sicherheitsgründen eine Rückleitung für die Signalleitung. Die Durchgängigkeit der Geräteerde zwischen der Signalleitung und dem Elektrofahrzeug wird seitens der Ladesteuerungseinrichtung durch Messung des Stromflusses (des sog. »Pilotsignals«) in der Signalleitung überprüft. Ein Stromfluss in die Kabel-garnitur und somit ein Laden des Akkumulators darf nur erfolgen, wenn der Signalleitungsstromkreis ordnungsgemäß geschlossen ist.

Der Übergabepunkt ist definiert als der Ort, an die elektrische Energie in die Energiesenke - Elektrofahrzeug EV - eingespeist wird. Dieser Übergabepunkt entspricht in der Zeichnung dem fahrzeugseitigen Ende des Ladekabels CC.

Der Anschlusspunkt ist definiert als der Ort, an die elektrische Energie zum Betrieb bzw. zum Laden der Energiesenke - Elektrofahrzeug EV - entnommen wird. Dieser Anschlusspunkt entspricht in der Zeichnung dem Anschluss des Verbindungskabels C der Ladestation EVSE, an der auch die jeweilige Messung durch die jeweilige Messvorrichtung MD vorgenommen wird.

Fig. 2 zeigt ein eine Messvorrichtung MD gemäß einem Ausführungsbeispiel der Erfindung. Die Messvorrichtung MD umfasst eine erste Messeinheit M1 zur Messung einer ersten elektrischen Leistung an zwei Leiter L1,L2 im Anschlusspunkt, eine zweite Messeinheit zur Messung zumindest einer zweiten elektrischen Größe an den Leiterschirmen der beiden Leiter L1,L2 und Bestimmungseinheit DU zur Bestimmung eines Blindleistungsanteils aus der zweiten elektrischen Größe und zur Bestimmung der am Übergabepunkt übergebenen elektrischen Energie anhand der um den Blindleistungsanteil kompensierten ersten elektrischen Leistung.

Die Messeinheit M1 erfasst die erste elektrische Leistung in fachüblicher Weise durch eine Messung der an den Leitungen L1, L2 anliegenden elektrischen Spannung und des Ladestroms.

Auf der linken Seite der schematisch dargestellten Messvorrichtung MD sind zwei interne Leitungen mit entsprechenden Kontakten, jeweils ohne Bezugszeichen dargestellt. Diese internen Leitungen dienen der Verbindung der Messvorrichtung MD mit der Vorrichtung PU innerhalb der Ladestation EVSE.

Gemäß der hier erläuterten Ausgestaltung der Erfindung erfolgt die Messung der zweiten elektrischen Größe am Schirmgeflecht der beiden Leiterschirmen L1,L2. Die beiden Leiterschirmen L1,L2 sind hierzu galvanisch mit den Eingängen der zweiten Messeinheit M2 verbunden. In alternativen Varianten kann die zweite Messeinheit M2 beliebig mit anderen oder weiteren - nicht dargestellten - Leiter oder Leiterschirmen des Ladekabels bzw. mit der Ladekabelschirmung selbst verbunden sein.

Eine Zweipol-Messung, beispielsweise eines komplexen Wechselstromwiderstands, erfolgt über den ersten Leiterschirm L1 auf einem geschlossenen Stromkreis hin zur - nicht dargestellten - Energiesenke, dem Elektrofahrzeug EV, und zurück auf einer Leiterschirmung S2 des anderen Leiters L2.

Der Stromkreis wird im Elektrofahrzeug durch eine galvanische Verbindung der beiden Leiterschirme, einen definierten Widerstand oder eine definierte Kapazität geschlossen, wobei dieser definierte Widerstand in der Messung berücksichtigt wird. Im Fall einer galvanischen Verbindung wird der Stromkreis im Elektrofahrzeug EV über einen gemeinsamen Bezugspunkt bzw. Massepotential geschlossen. Im Fall einer Messung des ohmschen Widerstands oder des komplexen Wechselstromwiderstands mit Ermittlung des ohmschen Widerstands als zweite elektrische Größe steht der gemessene oder bestimmte ohmsche Widerstand in einem bestimmten vorbekannten Verhältnis zu dem der Leiters L1,L2, was sich bei Verwendung des gleichen leitenden Materials in einem bestimmten Verhältnis der Querschnitte niederschlägt.

Das Verhältnis kann für gefertigte Leitungen in vorteilhafter Weise leicht überprüft aber nur schwer verändert werden, was eichrechtlichen Vorgabe eines nachweisbaren und nicht bestreitbaren Belegs entspricht. Die Messergebnisse werden hierzu protokolliert.

Insbesondere aufgrund einer ansteigenden Temperatur des Ladekabels beim Ladevorgang wird eine laufende oder zyklische Erhebung der zweiten elektrischen Größe erforderlich sein, da der Widerstand der ladestromführenden Leiter L1,L2 im Ladekabel und mit ihm der Blindleistungsanteil ebenfalls temperaturbedingt ansteigt.

Dieser Anstieg des elektrischen Widerstands wirkt allerdings sowohl auf die ladestromführenden Leitungen L1,L2 als auch auf die Leiterschirmung S1,S2 ein, sodass der mit Hilfe des gemessenen ohmschen Widerstands ermittelte Blindleistungsanteil weiterhin exakt bestimmbar ist.

Statt einer wertemäßigen Bestimmung der zweiten elektrischen Größe und des daraus bestimmbaren Blindleistungsanteils kann eine Bestimmung der übergebenen elektrischen Energie anhand der um den Blindleistungsanteil kompensierten ersten elektrischen Leistung - also der zu verrechnenden elektrischen Leistung - auch durch Kompensation der ersten elektrischen Leistungsmessung durchgeführt werden. Hierzu wird von der zweiten Messeinheit M2 gegenüber einem - nicht dargestellten - Massepotential eine äquivalente Spannung an eine der beiden Leiterschirmungen S1 angelegt und die Spannung am zweiten Ende der anderen Leiterschirmung S2 so eingestellt, dass der Strom durch den Leiterschirmungen S1,S2 in einem festen Verhältnis zu dem von der ersten Messeinheit M1 gemessenen Ladestrom steht, wodurch die eingestellte Spannung am Ende der zweiten Leiterschirmung S2 die Spannung am Übergabepunkt repräsentiert. Auf diese Weise ist eine Bestimmung des Blindleistungsanteils aus der Spannung, der zweiten elektrischen Größe, möglich, ohne dass diese gemessen wird.

Zusammenfassend stellt die vorliegende Erfindung Mittel für eine eichrechtskonforme Bestimmung der von einer Ladestation übergebenen elektrischen zur Verfügung, welche eine Messung am Übergabepunkt, also am fahrzeugseitigen Ende des Ladekabels, unnötig machen. Hierbei wird die von einer Ladestation übergebene elektrische Energie durch eine Messung der Energie vor dem Übergabepunkt bestimmt, wobei der Blindleistungs-anteil vom Abschlusspunkt bis zum Übergabepunkt durch kompensiert werden. Der Blindleistungsanteil wird aus mindestens einer zweiten elektrischen Größe, beispielsweise ein Widerstand eines Leiters oder einer Leiterschirmung, bestimmt, welche zu einer für die übergebene elektrische Energie relevanten analogen elektrischen Größe, beispielsweise ein ohmscher Gesamtwiderstand mindestens zweier an einem Ladestromkreis beteiligten Leiter, in einem festen Verhältnis steht.

## Patentansprüche

1. Messvorrichtung zur Erfassung einer von einer Ladestation (EVSE) übergebenen elektrischen Energie, wobei der Ladestation zumindest (EVSE) zeitweise ein Ladekabel (CC) zur Ausbildung einer elektrischen Verbindung zwischen einem Anschlusspunkt des Ladekabels (CC) an der Ladestation (EVSE) und einen Übergabepunkt des Ladekabels (CC) an einer Energiesenke (EV) zuordenbar ist und wobei das Ladekabel (CC) eine Leitergarnitur mit einer Mehrzahl von Leiter (L1,L2) umfasst, wobei die Messvorrichtung umfasst:
- eine erste Messeinheit (M1) zur Messung einer ersten elektrischen Leistung an mindestens zwei Leiter (L1,L2) im Anschlusspunkt;
- eine zweite Messeinheit (M2) zur Messung zumindest einer zweiten elektrischen Größe am Anschlusspunkt;
**gekennzeichnet durch**:
- eine Bestimmungseinheit (DU) zur Bestimmung eines Anteils einer entlang des Ladekabels (CC) in Wärmeenergie umgesetzten elektrischen Energie aus der zweiten elektrischen Größe und zur Bestimmung der am Übergabepunkt übergebenen elektrischen Energie anhand der um den Anteil der entlang des Ladekabels (CC) in Wärmeenergie umgesetzten elektrischen Energie kompensierten ersten elektrischen Leistung, wobei die zweite elektrische Größe zu einer für die übergebene elektrische Energie relevanten analogen elektrischen Größe in einem festen Verhältnis steht.

2. Messvorrichtung gemäß Patentanspruch 1, **dadurch gekennzeichnet, dass** die Messung der zweiten elektrischen Größe an mindestens einem Leiter des Ladekabels (CC) erfolgt, welcher mit keinem der zur Messung der ersten elektrischen Leistung vorgesehenen Leiter übereinstimmt.

3. Messvorrichtung gemäß Patentanspruch 1, **dadurch gekennzeichnet, dass** die Messung der zweiten elektrischen Größe an mindestens einer Leiterschirmung (S1,S2) erfolgt.

4. Messvorrichtung gemäß einem der vorgenannten Patentansprüche **dadurch gekennzeichnet, dass** die Messung der zweiten elektrischen Größe eine Messung eines elektrischen Widerstands, eine elektrische Spannungsmessung, eine elektrische Strommessung und/oder eine Messung einer elektrischen Energie am Anschlusspunkt umfasst.

5. Verfahren zur Erfassung einer von einer Ladestation (EVSE) übergebenen elektrischen Energie, wobei der Ladestation (EVSE) zumindest zeitweise ein Ladekabel (CC) zur Ausbildung einer elektrischen Verbindung zwischen einem Anschlusspunkt des Ladekabels (CC) an der Ladestation (EVSE) und einen Übergabepunkt des Ladekabels (CC) an einer Energiesenke (SV) zuordenbar ist und wobei das Ladekabel (CC) eine Leitergarnitur mit einer Mehrzahl von Leiter (L1,L2) umfasst, umfassend folgende Schritte:
- Messung einer ersten elektrischen Leistung an mindestens zwei Leiter (L1,L2) im Anschlusspunkt;
- Messung zumindest einer zweiten elektrischen Größe am Anschlusspunkt;
**gekennzeichnet durch**,
- Bestimmung eines Anteils einer entlang des Ladekabels (CC) in Wärmeenergie umgesetzten elektrischen Energie aus der zweiten elektrischen Größe und zur Bestimmung der am Übergabepunkt übergebenen elektrischen Energie anhand der um den Anteil der entlang des Ladekabels (CC) in Wärmeenergie umgesetzten elektrischen Energie kompensierten ersten elektrischen Leistung, wobei die zweite elektrische Größe zu einer für die übergebene elektrische Energie relevanten analogen elektrischen Größe in einem festen Verhältnis steht.

6. Verfahren gemäß Patentanspruch 5, **dadurch gekennzeichnet, dass** die Messung der zweiten elektrischen Größe an mindestens einem Leiter des Ladekabels (CC) erfolgt, welcher mit keinem der zur Messung der ersten elektrischen Leistung vorgesehenen Leiter übereinstimmt.

7. Verfahren gemäß Patentanspruch 5, **dadurch gekennzeichnet, dass** die Messung der zweiten elektrischen Größe an mindestens einer Leiterschirmung (S1,S2) erfolgt.

8. Verfahren gemäß einem der vorgenannten Patentansprüche 5 bis 7, **dadurch gekennzeichnet, dass** die Messung der zweiten elektrischen Größe eine Messung eines elektrischen Widerstands, eine elektrische Spannungsmessung, eine elektrische Strommessung und/oder eine Messung einer elektrischen Energie am Anschlusspunkt umfasst.

9. Verfahren gemäß einem der vorgenannten Patentansprüche 5 bis 8, **dadurch gekennzeichnet, dass** die zumindest eine zweite elektrische Größe laufend, vorzugsweise zyklisch und/oder in einstellbaren zeitlichen Abständen gemessen wird.

## Claims

1. Measuring apparatus for capturing electrical energy transferred from a charging station (EVSE), wherein a charging cable (CC) for forming an electrical connection between a connection point of the charging cable (CC) on the charging station (EVSE) and a transfer point of the charging cable (CC) on an energy sink (EV) can be at least occasionally assigned to the charging station (EVSE), and wherein the charging cable (CC) comprises a conductor set having a plurality of conductors (L1, L2), wherein the measuring apparatus comprises:
- a first measuring unit (M1) for measuring a first electrical power on at least two conductors (L1, L2) at the connection point;
- a second measuring unit (M2) for measuring at least one second electrical variable at the connection point;
**characterized by**
- a determination unit (DU) for determining a portion of electrical energy converted into thermal energy along the charging cable (CC) from the second electrical variable and for determining the electrical energy transferred at the transfer point on the basis of the first electrical power compensated for by the portion of electrical energy converted into thermal energy along the charging cable (CC), wherein the second electrical variable is in a fixed relationship with respect to an analogue electrical variable relevant to the transferred electrical energy.

2. Measuring apparatus according to Patent Claim 1, **characterized in that** the second electrical variable is measured on at least one conductor of the charging cable (CC) which does not correspond to any of the conductors provided for measuring the first electrical power.

3. Measuring apparatus according to Patent Claim 1, **characterized in that** the second electrical variable is measured on at least one conductor shield (S1, S2).

4. Measuring apparatus according to one of the above-mentioned patent claims, **characterized in that** the measurement of the second electrical variable comprises a measurement of an electrical resistance, an electrical voltage measurement, an electrical current measurement and/or a measurement of electrical energy at the connection point.

5. Method for capturing electrical energy transferred from a charging station (EVSE), wherein a charging cable (CC) for forming an electrical connection between a connection point of the charging cable (CC) on the charging station (EVSE) and a transfer point of the charging cable (CC) on an energy sink (SV) can be at least occasionally assigned to the charging station (EVSE), and wherein the charging cable (CC) comprises a conductor set having a plurality of conductors (L1, L2), comprising the following steps of:
- measuring a first electrical power on at least two conductors (L1, L2) at the connection point;
- measuring at least one second electrical variable at the connection point;
**characterized by**
- determining a portion of electrical energy converted into thermal energy along the charging cable (CC) from the second electrical variable and determining the electrical energy transferred at the transfer point on the basis of the first electrical power compensated for by the portion of electrical energy converted into thermal energy along the charging cable (CC), wherein the second electrical variable is in a fixed relationship with respect to an analogue electrical variable relevant to the transferred electrical energy.

6. Method according to Patent Claim 5, **characterized in that** the second electrical variable is measured on at least one conductor of the charging cable (CC) which does not correspond to any of the conductors provided for measuring the first electrical power.

7. Method according to Patent Claim 5, **characterized in that** the second electrical variable is measured on at least one conductor shield (S1, S2).

8. Method according to one of the above-mentioned Patent Claims 5 to 7, **characterized in that** the measurement of the second electrical variable comprises a measurement of an electrical resistance, an electrical voltage measurement, an electrical current measurement and/or a measurement of electrical energy at the connection point.

9. Method according to one of the above-mentioned Patent Claims 5 to 8, **characterized in that** the at least one second electrical variable is measured continuously, preferably cyclically and/or at adjustable intervals of time.

## Revendications

1. Dispositif de mesure de détection d'une énergie électrique transmise par une station de charge (EVSE), dans lequel un câble de charge (CC) peut être affecté au moins temporairement à la station de charge (EVSE) pour former une liaison électrique entre un point de raccordement du câble de charge (CC) à la station de charge (EVSE) et un point de transmission du câble de charge (CC) à un puits d'énergie (EV) et dans lequel le câble de charge (CC) comprend une garniture conductrice avec une pluralité de conducteurs (L1, L2), dans lequel le dispositif de mesure comprend :
- une première unité de mesure (M1) pour mesurer une première puissance électrique à au moins deux conducteurs (L1, L2) dans le point de raccordement ;
- une deuxième unité de mesure (M2) pour mesurer au moins une deuxième grandeur électrique au point de raccordement ;
**caractérisé par** :
- une unité de détermination (DU) pour déterminer une part d'une énergie électrique convertie en énergie thermique le long du câble de charge (CC) à partir de la deuxième grandeur électrique et pour déterminer l'énergie électrique transmise au point de transmission à l'aide de la première puissance électrique compensée par la part de l'énergie électrique convertie en énergie thermique le long du câble de charge (CC) ; dans lequel la deuxième grandeur électrique se trouve dans un rapport fixe avec une grandeur électrique analogue pertinente pour l'énergie électrique transmise.

2. Dispositif de mesure selon la revendication 1, **caractérisé en ce que** la mesure de la deuxième grandeur électrique est réalisée à au moins un conducteur du câble de charge (CC), lequel ne coïncide avec aucun des conducteurs prévus pour mesurer la première puissance électrique.

3. Dispositif de mesure selon la revendication 1, **caractérisé en ce que** la mesure de la deuxième grandeur électrique est réalisée à au moins un blindage de conducteur (S1, S2).

4. Dispositif de mesure selon l'une des revendications susmentionnées, **caractérisé en ce que** la mesure de la deuxième grandeur électrique comprend une mesure d'une résistance électrique, une mesure de tension électrique, une mesure de courant électrique et/ou une mesure d'une énergie électrique au point de raccordement.

5. Procédé de détection d'une énergie électrique transmise par une station de charge (EVSE), dans lequel un câble de charge (CC) peut être affecté au moins temporairement à la station de charge (EVSE) pour former une liaison électrique entre un point de raccordement du câble de charge (CC) à la station de charge (EVSE) et un point de transmission du câble de charge (CC) à un puits d'énergie (SV) et dans lequel le câble de charge (CC) comprend une garniture conductrice avec une pluralité de conducteurs (L1, L2), comprenant les étapes suivantes :
- mesure d'une première puissance électrique à au moins deux conducteurs (L1, L2) dans le point de raccordement ;
- mesure d'au moins une deuxième grandeur électrique au point de raccordement ;
**caractérisé par**,
- la détermination d'une part d'une énergie électrique convertie en énergie thermique le long du câble de charge (CC) à partir de la deuxième grandeur électrique et pour déterminer l'énergie électrique transmise au point de transmission à l'aide de la première puissance électrique compensée par la part de l'énergie électrique convertie en énergie thermique le long du câble de charge (CC), dans lequel la deuxième grandeur électrique se trouve dans un rapport fixe avec une grandeur électrique analogue pertinente pour l'énergie électrique transmise.

6. Procédé selon la revendication 5, **caractérisé en ce que** la mesure de la deuxième grandeur électrique est réalisée à au moins un conducteur du câble de charge (CC), lequel ne coïncide avec aucun des conducteurs prévus pour mesurer la première puissance électrique.

7. Procédé selon la revendication 5, **caractérisé en ce que** la mesure de la deuxième grandeur électrique est réalisée à au moins un blindage de conducteur (S1, S2).

8. Procédé selon l'une des revendications susmentionnées 5 à 7, **caractérisé en ce que** la mesure de la deuxième grandeur électrique comprend une mesure d'une résistance électrique, une mesure de tension électrique, une mesure de courant électrique et/ou une mesure d'une énergie électrique au point de raccordement.

9. Procédé selon l'une des revendications susmentionnées 5 à 8, **caractérisé en ce que** la au moins une deuxième grandeur électrique est mesurée en permanence, de préférence d'une manière cyclique et/ou à intervalles de temps réglables.
